# EUROPÄISCHE PATENTSCHRIFT

(11) **EP 2 033 852 B1**
(45) Veröffentlichungstag und Bekanntmachung des Hinweises auf die Patenterteilung: **18.01.2012**
(21) Anmeldenummer: 07017687.0
(22) Anmeldetag: 10.09.2007
(51) Int. Cl.: B60R 21/237, B60R 21/231

(54) **Gasleitung**
Gas pipe
Guidage de gaz

(43) Veröffentlichungstag der Anmeldung: 11.03.2009
(73) Patentinhaber: Autoliv Development AB, 447 83 Vårgårda (SE)
(72) Erfinder: Guthke, Detlev, 58089 Hagen (DE); Maiwald, Helmut, 51515 Kürten (DE)
(74) Vertreter: Schön, Thilo

(56) Entgegenhaltungen:
- WO-A-02/00476
- WO-A-03/018372
- WO-A-2006/092226
- DE-A1- 10 015 160
- DE-A1-102006 006 214
- US-A- 3 953 640
- US-A1- 2003 184 060
- US-B1- 6 276 712
- US-B1- 6 336 653

## Beschreibung

Die Erfindung betrifft eine Gasleitung für eine Luftsackanordnung für Kraftfahrzeuge.

Es ist bekannt, beispielsweise so genannte Roof-Rail-Airbags über flexible Gasleitungen zu befüllen. Die Gasleitungen sind in der Lage, die Entfernung zwischen einem zum Aufblasen des Luftsacks dienenden Gasgenerator und dem Luftsack zu überbrücken und befinden sich folglich zumindest teilweise außerhalb des Luftsacks.

Insbesondere aufgrund des in Luftsackanwendungen hoch-dynamischen Aufblasprozesses müssen derartige Gasleitungen eine Reihe von Anforderungen erfüllen. Zu nennen sind hier insbesondere Gasdichtigkeit, geringes Gewicht, Formstabilität, Flexibilität sowie kostengünstige Herstellbarkeit. Wichtig ist auch, dass die Gasleitungen in ihrem Inneren derart ausgebildet sind, dass sie dem Gasstrom einen möglichst geringen Widerstand entgegensetzen. Zu große Strömungswiderstände könnten nämlich dazu führen, dass der Luftsack mit einer nicht tolerierbaren Zeitverzögerung befüllt wird. Ein weiteres wichtiges Kriterium ist also die Geschwindigkeit, mit welcher die Gasleitung das Befüllen des Luftsacks ermöglicht. Grundsätzlich werden kleine Strömungsquerschnitte angestrebt, da sich hierdurch nicht nur größere Aufblasgeschwindigkeiten ergeben, sondern zusätzlich Kosten und Gewicht gespart werden. Allerdings erhöht sich bei kleineren Strömungsquerschnitten der innerhalb der Gasleitung herrschende Druck, wodurch das Material der Gasleitung stärker belastet wird.

Es existieren zahlreiche Standardschläuche für unterschiedlichste Anwendungen. So sind beispielsweise geflochtene sowie rund oder flach in einem Stück gewebte Schläuche bekannt. Ebenfalls bekannt sind aus einem schmalen Materialstreifen schräg gewickelte Schläuche, bei denen also die Längsrichtung des Ausgangsstreifens mit der Längsachse des fertig gewickelten Schlauches einen von Null verschiedenen Winkel einschließt. Es hat sich herausgestellt, dass diese bekannten Schläuche nicht in der Lage sind, die Anforderungen zu erfüllen, die an Gasleitungen für Luftsackanwendungen gestellt werden. Beispielsweise würden sich manche der bekannten Schläuche verkürzen, wenn sie unter Druck gesetzt werden, was für Luftsackanwendungen nicht hinnehmbar wäre.

Aus der WO 2006/092226 A ist ein rohrförmiges Gasleitelement, sowie eine Gaserzeugungs- und Zuführeinheit bekannt.

Die WO 02/09476 A, die WO 03/018372 A und die DE 100 15 160 A1 offenbaren flexible Schläuche sowie Rohr- bzw. Zweigleitungen, um Gas im Inneren eines Gassacks zu verteilen.

In der US 2003/184060 A1, der DE 10 2006 006 214 A1 und der US 6,276,712 B 1 sind Schläuche zur Befüllung eines Gassacks beschrieben, die spiralförmig von einem Spannmechanismus umgeben bzw. diagonal geformt sind. Die Länge dieser Schläuche verkürzt sich jedoch bei einem Aufblasen des Gassacks.

Aufgabe der Erfindung ist es, eine Gasleitung der eingangs genannten Art zu schaffen, die bei möglichst geringem Gewicht und möglichst niedrigen Herstellungskosten alle Anforderungen erfüllt, die sich insbesondere angesichts des hoch-dynamischen Aufblasvorgangs in Luftsackanwendungen stellen.

Die Lösung dieser Aufgabe erfolgt durch die Merkmale des Anspruchs 1.

Erfindungsgemäß ist die Gasleitung derart ausgebildet, dass sie unter dem Einfluss von mittels eines Gasgenerators freigegebenen, durch sie hindurchströmenden Gases aus einer Montagekonfiguration in eine Aufblaskonfiguration mit gegenüber der Montagekonfiguration vergrößertem Strömungsquerschnitt gelangen kann, wobei die Gasleitung durch Formen eines im Ausgangszustand flächigen Materialstücks hergestellt ist, das im Ausgangszustand eine Längsrichtung aufweist, wobei im geformten Zustand die Längsrichtung parallel zu einer Längsachse der Gasleitung verläuft.

Erfindungsgemäß besteht die Gasleitung aus einem flächigen Ausgangsmaterial, das in Bezug auf seine Längsrichtung derart geformt wurde, dass diese Längsrichtung parallel zur Längsachse der Gasleitung verläuft. Dieses Formen wird in Abgrenzung zu einer Schrägwicklung im Folgenden auch einfach als "Längswicklung" bezeichnet. Das Formen des flächigen Materialstücks kann beispielsweise durch Wickeln, Rollen, Falten oder Legen erfolgen. Dabei ist es nicht erforderlich, dass am Ende des Formvorgangs ein Gebilde mit einem kreisförmigen Querschnitt vorliegt. Vielmehr kann die Gasleitung am Ende des Formvorgangs beispielsweise eine flache Konfiguration aufweisen, die - in Abhängigkeit von dem jeweiligen Herstellungsverfahren - besonders gut geeignet ist, in einem weiteren Herstellungsschritt die geformte Gasleitung gasdicht zu verschließen.

Die Gasleitung ist insbesondere flexibel, biegsam und/oder weich ausgebildet. Des weiteren ist insbesondere vorgesehen, dass die Gasleitung durch Wickeln, Rollen, Falten und/oder Legen des im Ausgangszustand flächigen Materialstück hergestellt.

Erfindungsgemäß weist ein als Ausgangsmaterial für das Materialstück vorgesehenes Gewebe eine Gewebestruktur mit wenigstens einer identifizierbaren Vorzugsrichtung auf, die mit der Längsrichtung des Materialstücks im Ausgangszustand zusammenfällt.

Insbesondere handelt es sich bei dem flächigen Ausgangsmaterial um ein streifenförmiges Materialstück. Dieser Materialstreifen wird derart geformt, beispielsweise aufgewickelt oder aufgerollt, dass die Längskanten des Streifens parallel zur Längsachse der fertigen Gasleitung verlaufen. Der Materialstreifen wird also insbesondere nicht schräg gewickelt. Die Länge des Materialstreifens entspricht damit der Länge der geformten Gasleitung.

Was die Gasdichtigkeit anbetrifft, so ist erfindungsgemäß insbesondere vorgesehen, dass die Gasleitung umfangsseitig ausschließlich durch Kleben oder durch eine thermische Verbindung, insbesondere durch Verschweißen (z.B. Ultraschallschweißen), gasdicht verschlossen ist. Hierauf wird nachstehend näher eingegangen.

In einem weiteren Ausführungsbeispiel ist vorgesehen, dass das Materialstück als Ausgangsmaterial ein Gewebe umfasst, insbesondere ein Gewebe, dessen Festigkeitsträger - insbesondere Fäden und/oder Fasern - aus Kunststoff hergestellt sind. Verwendet wird beispielsweise ein Gewebe aus PA 6.6 mit 470 dTex. Ein derartiges Gewebe wird bekanntermaßen insbesondere auch für die Luftsäcke selbst verwendet. Alternativ kann das Materialstück als Ausgangsmaterial eine Folie umfassen.

Des Weiteren ist insbesondere vorgesehen, dass das Materialstück eine aufgebrachte gasdichte Beschichtung aufweist. Insbesondere ist die Beschichtung sowohl auf der Innenseite als auch auf der Außenseite des Materialstücks vorgesehen.

Besonders bevorzugt ist es, wenn die Vorzugsrichtung parallel zu das Gewebe bildenden Kett- oder Schussfäden verläuft.

Bei einem mit einer gasdichten Beschichtung versehenen Gewebe wird auf diese Weise erreicht, dass die das Gewebe bildenden Festigkeitsträger (Fäden bzw. Fasern) sich auch bei einem hohen Gasdruck innerhalb der Gasleitung, wie er beim Aufblasen von Luftsäcken nach Freigabe des Gases durch einen Gasgenerators entsteht, nicht verschieben. Eine Verschiebung der Festigkeitsträger würde zu einer übermäßigen mechanischen Belastung der Haftung zwischen der abdichtenden Beschichtung einerseits und dem Gewebe andererseits führen. Die Gasdichtigkeit der Gasleitung wäre damit bei hohen Innendrücken nicht gewährleistet. Wenn sich die Festigkeitsträger des Gewebes nicht verschieben, dann ergeben sich in vorteilhafter Weise auch keine unerwünschten Längen- oder Querschnittsänderungen der Gasleitung während des Aufblasprozesses.

Dem vorstehend erläuterten Ausführungsbeispiel liegt der zusätzlich unabhängig beanspruchte Gedanke zugrunde, für die erfindungsgemäße Gasleitung ein flächiges Ausgangsmaterial vorzusehen, das ein Gewebe mit einer Gewebestruktur umfasst, und bei der von dem flächigen Ausgangsmaterial ausgehenden Formung der Gasleitung dafür zu sorgen, dass die Gewebestruktur auf die Längsachse der Gasleitung in geeigneter Weise abgestimmt und insbesondere mit der Längsachse der Gasleitung ausgerichtet ist.

Es hat sich in für den Fachmann überraschender Weise herausgestellt, dass eine allen Anforderungen gerecht werdende und insbesondere den in Luftsackanwendungen auftretenden hohen Belastungen standhaltende Gasleitung einfach dadurch geschaffen werden kann, dass ein flächiges Materialstück längs gewickelt und anschließend - insbesondere durch Verkleben oder durch eine thermische Verbindung, insbesondere durch Verschweißen, an den Randbereichen - umfangsseitig gasdicht verschlossen wird. Es hat sich dabei überraschend gezeigt, dass ein längsgewickeltes Materialstück ausschließlich durch Verkleben oder Verschweißen an den Rändern mit einer ausreichenden Gasdichtigkeit versehen werden kann.

In einem weiteren Ausführungsbeispiel der Erfindung kann die Gasleitung zumindest bereichsweise mit Überlapp geformt sein. Der Überlapp kann sich über einen Umfangsbereich von weniger als 360° erstrecken, wobei es aber auch möglich ist, dass sich der Überlapp über mehr als 360° erstreckt.

Es hat sich in unerwarteter Weise herausgestellt, dass die innerhalb der Gasleitung liegende Kante des Materialstücks keinen problematischen Strömungswiderstand für das Gas darstellt. Vorzugsweise ist eine im Überlappungsbereich vorgesehene Klebung derart ausgebildet, dass sie den Randbereich vollständig umfasst, d.h. bis an die Kante heranreicht.
Auf diese Weise werden "lose" oder "flatternde" Materialabschnitte innerhalb der Gasleitung sicher vermieden. In einem möglichen Ausführungsbeispiel kann bei mit Überlapp geformter Gasleitung die Klebung im Überlappungsbereich vollflächig ausgebildet sein.

Alternativ ist es möglich, die Gasleitung zumindest bereichsweise ohne Überlapp zu formen, wobei einander zugewandte Kanten des Materialstücks aneinander anstoßen oder zwischen den Kanten ein Spalt vorhanden ist. Zum gasdichten Verschließen der Gasleitung kann in diesem Fall ein zusätzliches Materialstück vorgesehen sein, das mit dem geformten Materialstück insbesondere durch Kleben oder Verschweißen verbunden ist, und zwar derart, dass Stoßstellen bzw. Spalte zwischen einander zugewandten Kanten des Materialstücks gasdicht verschlossen sind. Das zusätzliche Materialstück kann somit gewissermaßen wie ein Pflaster, Flicken oder "patch" einfach über die Stoßstelle bzw. den Spalt geklebt bzw. dort mit dem Materialstück verschweißt werden, wobei sich gezeigt hat, dass dies sowohl von außen als auch von innen möglich ist. Insbesondere im Fall des Verklebens hat das Verschließen der Gasleitung mittels eines zusätzlichen Materialstücks den Vorteil, dass ausschließlich das zusätzliche Materialstück mit einem Klebemittel vorbereitet sein kann, so dass eine Handhabung einer mit einem Klebemittel versehenen Gasleitung nicht notwendig ist, da nur das zusätzliche Materialstück als Träger für das Klebemittel vorgesehen ist. Die Herstellung der erfindungsgemäßen Gasleitung wird hierdurch erheblich vereinfacht.

In einem weiteren Ausführungsbeispiel der Erfindung ist eine zusätzliche, in Umfangsrichtung wirksame lokale Verstärkung vorgesehen. Hierbei bezieht sich "lokal" auf die axiale Richtung, d.h. entlang der Gasleitung können eine oder mehrere Umfangsverstärkungen vorgesehen sein, die der Gasleitung zusätzliche Stabilität verleihen.

Die lokale Verstärkung kann in einem Ausführungsbeispiel von einem zusätzlichen Materialstück gebildet sein, das mit dem geformten Materialstück insbesondere durch Verkleben, durch Vernähen oder durch eine thermische Verbindung, insbesondere durch Verschweißen, verbunden ist und sich zumindest über einen Teilumfangsbereich der Gasleitung erstreckt. Beispielsweise kann ein Materialstreifen nach Art einer Manschette von außen auf die Gasleitung geklebt sein.

Alternativ oder zusätzlich-können separate Verstärkungselemente vorgesehen sein, die auf das geformte Materialstück aufgeschoben oder aufgesteckt werden und darüber hinaus vorzugsweise mit dem Materialstück nicht verbunden sind, wobei Verbindungen z.B. durch Verkleben oder Verschweißen, um die Verstärkungselemente in ihrer axialen Position bezüglich der Gasleitung zu halten, zusätzlich möglich sind. Derartige, zumindest im Wesentlichen "lose" aufgeschobene oder aufgesteckte Verstärkungselemente können z.B. in Form von Ring-, Manschetten-, Klammer-oder Clipsstücken vorgesehen sein. In der Aufblaskonfiguration der Gasleitung betrachtet kann man sich ein derartiges Verstärkungselement also z.B. wie einen Serviettenring vorstellen. Die Verstärkungselemente werden derart dimensioniert, dass sie beim Aufblasen der Gasleitung nach Art eines Korsetts eine radiale Ausdehnung der Gasleitung über ein vorgegebenes Maß hinaus verhindern und somit als Ausdehnungsbegrenzungen wirken.

Alternativ oder zusätzlich ist es möglich, eine oder mehrere lokale Verstärkungen in Form von einstückig mit dem geformten Materialstück ausgebildeten, durch entsprechendes Zuschneiden des geformten Materialstücks entstandenen Materialabschnitten vorzusehen. Derartige Materialabschnitte können z.B. in Form von laschenartigen Erweiterungen an den Längskanten des flächigen Ausgangsstücks vorgesehen sein. Eine lokale Verstärkung kann einen einzigen Materialabschnitt auf einer Längsseite des Materialstücks umfassen, wobei es auch möglich ist, eine lokale Verstärkung von zwei einander gegenüberliegenden Materialabschnitten zu bilden.

Die Erfindung betrifft außerdem eine Luftsackanordnung für Kraftfahrzeuge mit wenigstens einem aufblasbaren Luftsack, zumindest einem im am Fahrzeug montierten Zustand entfernt von dem Luftsack angeordneten Gasgenerator zum Aufblasen des Luftsacks, und wenigstens einer Gasleitung der hier angegebenen Art, über die der Luftsack aufblasbar ist und die im am Fahrzeug montierten Zustand zumindest teilweise außerhalb des Luftsacks verläuft.

Des Weiteren betrifft die Erfindung ein Verfahren zur Herstellung einer Gasleitung für eine Luftsackanordnung für Kraftfahrzeuge, bei dem ein im Ausgangszustand flächiges Materialstück, insbesondere durch Wickeln, Rollen, Falten und/oder Legen, zu einem Schlauch geformt wird, wobei das Materialstück im Ausgangszustand eine Längsrichtung aufweist und im geformten Zustand die Längsrichtung parallel zu einer Längsachse des Schlauches verläuft, und bei dem der Schlauch umfangsseitig ausschließlich durch Kleben oder durch eine thermische Verbindung, insbesondere durch Verschweißen, gasdicht verschlossen wird.

In einem Ausführungsbeispiel der Erfindung kann eine parallel zur Längsachse der Gasleitung verlaufende, innerhalb der Gasleitung liegende Halteklebung vorgesehen sein, durch welche zwei schmale Bereiche der Innenseite der Gasleitung miteinander verklebt sind und die Gasleitung in einer flachen Konfiguration gehalten wird. Eine derartige Halteklebung kann so ausgelegt werden, dass sie sich nach Art einer Solltrennstelle beim Aufblasen des Luftsacks löst, ohne dass das die Gasleitung bildende Materialstück beschädigt und somit undicht wird. Die Herstellung der Halteklebung kann beim Verkleben der sich in Längsrichtung erstreckenden Randbereiche des Materialstücks zum gasdichten Verschließen der geformten Gasleitung erfolgen, indem die Gasleitung gezielt derart von außen mit Druck beaufschlagt wird, dass eine gezielt überschüssig und asymmetrisch aufgebrachte Menge an Klebemittel aus dem Zwischenraum zwischen den zu verklebenden Randbereichen in das Innere der Gasleitung quillt und so zwischen einander gegenüberliegenden Bereichen der Innenseite der Gasleitung einen diese Bereiche miteinander verklebenden Klebemittelstreifen ausbildet.

Außerdem betrifft die Erfindung die Verwendung einer Gasleitung der hier angegebenen Art zum Verbinden wenigstens eines aufblasbaren Luftsacks einer Luftsackanordnung für Kraftfahrzeuge mit zumindest einem im am Fahrzeug montierten Zustand entfernt von dem Luftsack angeordneten, zum Aufblasen des Luftsacks dienenden Gasgenerator.

Weitere mögliche Ausführungsformen der Erfindung sind in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: eine Ausführungsform einer erfindungsgemäßen Gasleitung,
- Fig. 2 und 2a: weitere Ansichten der Gasleitung von Fig. 1,
- Fig. 3: ein weiteres Ausführungsbeispiel einer erfindungsgemäßen Gasleitung,
- Fig. 4 und 5: weitere Ausführungsbeispiele einer erfindungsgemäßen Gasleitung,
- Fig. 6: schematisch ein flächiges Materialstück zur Herstellung einer erfindungsgemäßen Gasleitung, und
- Fig. 7 und 8: Beispiele für lokale Umfangsverstärkungen einer erfindungsgemäßen Gasleitung.

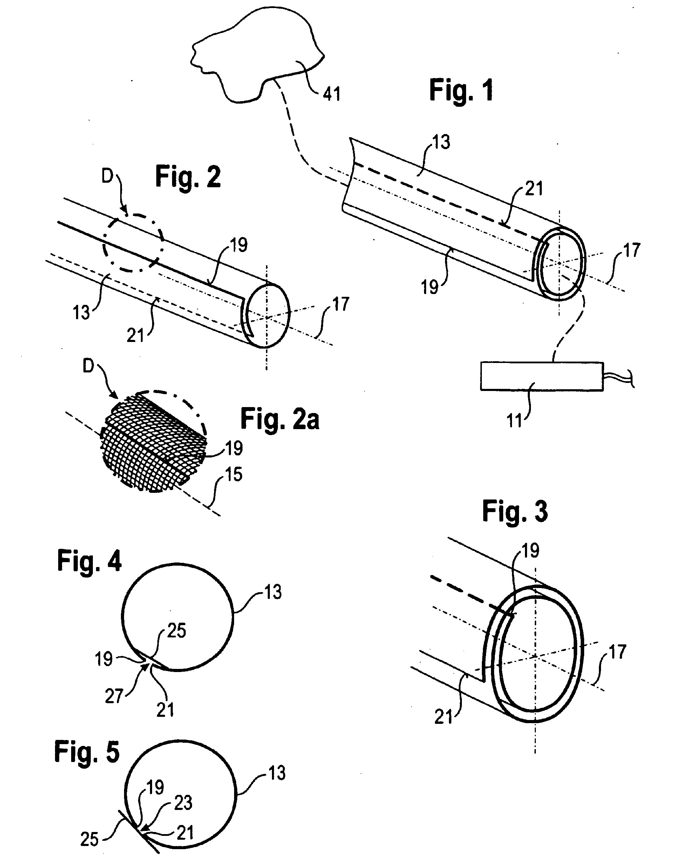

Die in Fig. 1, 2 und 2a dargestellte erfindungsgemäße Gasleitung, die im Folgenden auch als Schlauch bezeichnet wird, ist aus einem im Ausgangszustand flächigen Materialstück 13 hergestellt, das durch Formen in eine röhrenartige Konfiguration gebracht und an Randbereichen verklebt ist, um die Gasdichtigkeit herzustellen. Alternativ zu einem Verkleben - und dies gilt für alle Ausführungsformen - kann die Gasdichtigkeit auch durch Verschweißen der Randbereiche hergestellt werden. In den hier dargestellten Beispielen ist das Materialstück 13 so aufgerollt oder aufgewickelt worden, dass ein Überlapp von etwa 90° zwischen den beiden Längskanten 19, 21 des Materialstücks vorhanden ist. Die Längskanten 19, 21 verlaufen parallel zur Längsachse 17 des Schlauches.

Die erfindungsgemäße Gasleitung ist Bestandteil einer Luftsackanordnung für Kraftfahrzeuge, die hier nur schematisch dargestellt ist und einen Luftsack 41 sowie einen Gasgenerator 11 umfasst, die durch die Gasleitung miteinander verbunden sind. Das von dem Gasgenerator 11 freigegebene Gas strömt durch die Gasleitung hindurch in den Luftsack 41, wodurch der Luftsack 41 aufgeblasen wird.

Das Materialstück 13 umfasst ein Gewebe beispielsweise aus PA 6.6 mit 470 dTex, das eine gitterartige Gewebestruktur aufweist, die in Fig. 2a (Detail D der Fig. 2) dargestellt ist. Die Gitterstruktur besteht aus zwei senkrecht zueinander verlaufenden Gitterlinien, die von den das Gewebe bildenden Längs- und Querfäden (Kett- und Schussfäden) gebildet werden. Aufgrund dieser Gitterstruktur weist das Gewebe und damit das Materialstück 13 zwei identifizierbare Vorzugsrichtungen auf. Die Formung des im Ausgangszustand flächigen Materialstücks 13 zu dem Gasschlauch beispielsweise durch Aufwickeln oder Aufrollen erfolgt derart, dass im geformten Gasschlauch eine Vorzugsrichtung 15, also entweder die Kettoder die Schussfäden, parallel zur Längsachse 17 des Gasschlauches verläuft.

Um die Gasdichtigkeit des Gewebes sicherzustellen, ist das Gewebe mit Silikon beschichtet. Für die Gasdichtigkeit reicht eine einseitige Beschichtung aus.

Um für ein gasdichtes Verschließen des aus dem flächigen Materialstück 13 geformten Schlauches zu sorgen, wird gemäß einem möglichen Ausführungsbeispiel dieser an den Randbereichen verklebt. Als Klebemittel wird ebenfalls Silikon verwendet. Das Silikonmaterial wird hierzu auf das Gewebe aufgetragen. Zur Herstellung der Klebeverbindung werden die Randbereiche aufeinander gelegt. Der dadurch initiierte Vernetzungsprozess kann durch Erwärmen beschleunigt werden, wobei sich eine ausreichend feste und gasdichte Verbindung zwischen dem Beschichtungssilikon und dem Klebesilikon aber auch ohne eine zusätzliche Erwärmung ergibt.

Wenn ein einseitig beschichtetes Gewebe verwendet wird, wird das Materialstück bevorzugt so geformt, dass die beschichtete Seite des Gewebes die Innenseite der Gasleitung bildet. In einer alternativen Vorgehensweise ist es möglich, das Gewebe beidseitig zu beschichten.

Vorzugsweise ist das für die Gasleitung verwendete Material identisch mit dem für die Hülle des Luftsacks 41 verwendeten Material, für welches ebenfalls ein mit Silikon beschichtetes Gewebe aus PA 6.6 mit 470 dTex verwendet werden kann. Dieses Material ist ausreichend gasdicht, weist ein geringes Gewicht auf, besitzt eine ausreichende Formstabilität in den relevanten Belastungsrichtungen, ist flexibel, vielfach erprobt, vergleichsweise preisgünstig und auf einfache Weise sowohl wie vorstehend beschrieben verklebbar als auch verschweißbar.

Bei dem flächigen Materialstück 13, aus welchem die Gasleitung bzw. der Schlauch geformt wird, handelt es sich insbesondere um ein streifenförmiges, zumindest im Wesentlichen rechtwinkliges Materialstück. Die Kett-und Schussfäden der Gewebestruktur verlaufen parallel und senkrecht zur Längsachse dieses Materialstreifens, d.h. zu den Längskanten 19, 21 des Materialstreifens.

Während Fig. 1 eine Gasleitung mit einem Überlapp von etwa 90° zeigt, ist in Fig. 3 eine Ausführungsform dargestellt, bei der sich die Materiallagen um mehr als 360° überlappen, nämlich um etwa 450°, d.h. der Winkelabstand zwischen den beiden parallel zur Längsachse 17 der Gasleitung verlaufenden Längskanten 19, 21 des Ausgangsmaterialstücks 13 beträgt wiederum etwa 90°. Allerdings umfasst die Gasleitung in diesem Beispiel "eine Umdrehung mehr", d.h. zwischen den beiden an die Längskanten 19, 21 angrenzenden Randbereichen des Materialstücks 13 befindet sich eine weitere Materiallage, so dass in diesem Bereich die Gasleitung dreiwandig ausgebildet ist.

Obwohl eine vollflächige Verklebung über den gesamten, etwa 450° umfassenden Überlappungsbereich grundsätzlich möglich ist, hat sich gezeigt, dass die Verklebung - in Umfangsrichtung betrachtet - auch unterbrochen sein kann. Es ist insbesondere ausreichend, wenn das Material nur in den an die Längskanten 19, 21 angrenzenden Randbereichen verklebt ist. Lediglich beispielhaft könnte die Verklebung so erfolgen, dass die mittlere Lage über 45° ausgehend von der inneren Längskante 19 auf ihrer Innenseite und über 45° ausgehend von der äußeren Kante 21 auf ihrer Außenseite mit dem jeweiligen Randbereich verklebt ist.

Die Fig. 4 und 5 zeigen weitere Ausführungsformen, bei denen die erfindungsgemäße Gasleitung ohne Überlapp geformt ist. Die beiden Längskanten 19, 21 des Materialstücks 13 sind somit einander zugewandt bzw. liegen einander gegenüber, wobei sie entweder unter Bildung einer Stoßstelle 27 aneinander anstoßen bzw. unmittelbar nebeneinander liegen (Fig. 4) oder gemäß Fig. 5 unter Bildung eines Spalts 23 mit Abstand voneinander verlaufen. In beiden Fällen kann die Gasdichtigkeit mittels eines zusätzlichen, insbesondere streifenförmigen Materialstücks 25 hergestellt werden, das wie ein Pflaster, Flicken oder "patch" über die Stoßstelle 27 bzw. den Spalt 23 gelegt und mit den an die Längskanten 19, 21 angrenzenden Randbereichen des Materialstücks 13 verklebt wird. In beiden Fällen kann das zusätzliche Materialstück 25 entweder von innen oder von außen aufgebracht werden. Insofern sind die in Fig. 4 und 5 dargestellten Varianten lediglich beispielhaft zu verstehen.

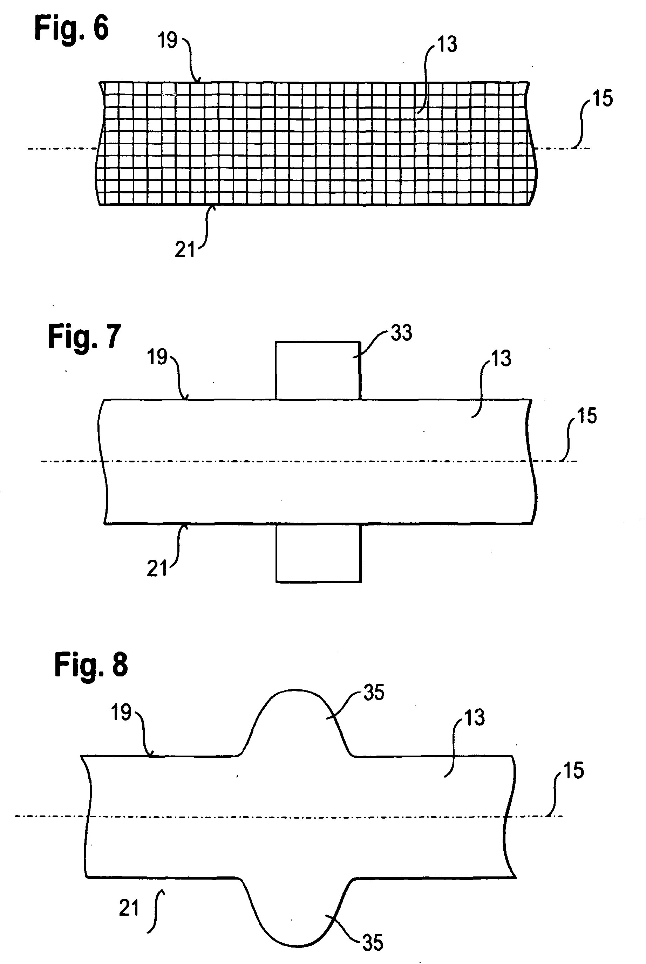

Während die Fig. 1 bis 5 die erfindungsgemäße Gasleitung in einer Aufblaskonfiguration zeigen, ist in den Fig. 6 bis 8 das zur Formung einer erfindungsgemäßen Gasleitung verwendete Materialstück 13 im flächigen Ausgangszustand dargestellt. Es handelt sich bei dem Materialstück 13 um einen Streifen, der nur über einen Teil seiner Länge dargestellt ist, die ein Vielfaches der Streifenbreite beträgt. Die beiden Längskanten 19, 21 des Streifens verlaufen parallel zu den nur in Fig. 6 dargestellten Kett-oder Schussfäden (identifizierbare Vorzugsrichtungen der Gewebestruktur) des beschichteten Gewebes, aus denen das Materialstück 13 besteht. Folglich verläuft die Längsrichtung 15 des Materialstücks 13, die bei geformter Gasleitung parallel zu deren Längsachse verläuft, parallel zu den Längskanten 19, 21 des Materialstücks 13.

Die Fig. 7 und 8 zeigen rein beispielhaft zwei Möglichkeiten für eine - in Längsrichtung gesehen - lokale Verstärkung der Gasleitung in Umfangsrichtung. Bei der in Fig. 7 dargestellten Variante ist ein zusätzlicher Materialstreifen 33 vorgesehen, der nach Art einer Manschette von außen um die Gasleitung herumgeklebt wird. Dieser Materialstreifen kann mit dem Materialstück 13 verklebt werden, bevor dieses zur Gasleitung geformt wird. Der Materialstreifen 33 braucht sich nicht über den gesamten Umfang der Gasleitung erstrecken. Ein relativ kurzer Materialstreifen 33, der sich im geformten Zustand über die außen liegende Längskante 19 oder 21 des Materialstücks 13 erstreckt, ist ausreichend. Alternativ können - wie im Einleitungsteil erwähnt - "lose" Verstärkungselemente auf die Gasleitung aufgeschoben oder aufgesteckt werden.

Alternativ kann gemäß Fig. 8 das Materialstück 13 derart zugeschnitten werden, dass an den Längskanten 19, 21 beispielsweise laschenartige Erweiterungen 35 vorhanden sind, die somit einstückig mit dem Materialstück 13 ausgebildete Materialabschnitte darstellen. Diese Materialabschnitte 35 stellen zusätzliche Flächen bereit, über welche das geformte Materialstück 13 z.B. verklebt oder verschweißt werden kann.

### Bezugszeichenliste

- 11: Gasgenerator
- 13: Materialstück
- 15: Längsrichtung
- 17: Längsachse
- 19: Kante
- 21: Kante
- 23: Spalt
- 25: zusätzliches Materialstück
- 27: Stoßstelle
- 29: Randbereich
- 31: Randbereich
- 33: lokale Verstärkung: zusätzliches Materialstück
- 35: lokale Verstärkung: Materialabschnitt, Lasche
- 41: Luftsack

## Patentansprüche

1. Gasleitung für eine Luftsackanordnung für Kraftfahrzeuge,
die derart ausgebildet ist, dass sie unter dem Einfluss von mittels eines Gasgenerators (11) freigegebenen, durch sie hindurch strömenden Gases aus einer Montagekonfiguration in eine Aufblaskonfiguration mit gegenüber der Montagekonfiguration vergrößertem Strömungsquerschnitt gelangen kann,
wobei die Gasleitung durch Formen eines im Ausgangszustand flächigen Materialstücks (13) hergestellt ist, das im Ausgangszustand eine Längsrichtung (15) aufweist, wobei im geformten Zustand die Längsrichtung (15) parallel zu einer Längsachse (17) der Gasleitung verläuft,
**dadurch gekennzeichnet,**
**dass** ein als Ausgangsmaterial für das Materialstück (13) vorgesehenes Gewebe eine Gewebestruktur mit wenigstens einer identifizierbaren Vorzugsrichtung aufweist, die mit der Längsrichtung (15) des Materialstücks (13) im Ausgangszustand zusammenfällt.

2. Gasleitung nach Anspruch 1,
**dadurch gekennzeichnet,**
**dass** die Gasleitung umfangsseitig ausschließlich durch Kleben oder durch eine thermische Verbindung, insbesondere durch Verschweiβen, gasdicht verschlossen ist.

3. Gasleitung nach Anspruch 1 oder 2,
**dadurch gekennzeichnet,**
**dass** das Materialstück (13) als Ausgangsmaterial ein Gewebe, insbesondere ein aus Kunststofffäden oder Kunststofffasern hergestelltes Gewebe, oder eine Folie umfasst.

4. Gasleitung nach einem der vorhergehenden Ansprüche,
**dadurch gekennzeichnet,**
**dass** die Vorzugsrichtung (15) parallel zu das Gewebe bildenden Kett- oder Schussfäden verläuft.

5. Gasleitung nach Anspruch 3 oder 4,
**dadurch gekennzeichnet,**
**dass** das Materialstück (13) eine aufgebrachte Beschichtung aufweist.

6. Gasleitung nach einem der Ansprüche 3 bis 5,
**dadurch gekennzeichnet,**
**dass** eine Beschichtung jeweils auf der Innenseite und auf der Auβenseite des Materialstücks (13) vorgesehen ist.

7. Gasleitung nach Anspruch 5 oder 6,
**dadurch gekennzeichnet,**
**dass** für die Beschichtung das gleiche oder ein gleichartiges Material, insbesondere ein Silikonmaterial, vorgesehen ist wie für ein Klebemittel, das zum gasdichten Verschließen der Gasleitung vorgesehen ist.

8. Gasleitung nach einem der vorhergehenden Ansprüche,
**dadurch gekennzeichnet,**
**dass** die Gasleitung zumindest bereichsweise mit Überlapp geformt ist.

9. Gasleitung nach Anspruch 8,
**dadurch gekennzeichnet,**
**dass** der Überlapp sich über einen Umfangsbereich von weniger als 360° erstreckt.

10. Gasleitung nach Anspruch 8,
**dadurch gekennzeichnet,**
**dass** der Überlapp sich über einen Umfangsbereich von mehr als 360° erstreckt.

11. Gasleitung nach einem der Ansprüche 8 bis 10,
**dadurch gekennzeichnet,**
**dass** bei mit Überlapp geformter Gasleitung die Klebung im Überlappungsbereich vollflächig ausgebildet ist.

12. Gasleitung nach einem der Ansprüche 8 bis 10,
**dadurch gekennzeichnet,**
**dass** bei mit Überlapp geformter Gasleitung die Klebung in Umfangsrichtung unterbrochen und zumindest, insbesondere ausschließlich, in sich an Kanten (19, 21) des Materialstücks (13) anschließenden Randbereichen (29, 31) ausgebildet ist.

13. Gasleitung nach einem der vorhergehenden Ansprüche,
**dadurch gekennzeichnet,**
**dass** die Gasleitung zumindest bereichsweise ohne Überlapp geformt ist, wobei einander zugewandte Kanten (19, 21) des Materialstücks (13) aneinander anstoßen oder zwischen den Kanten (19, 21) ein Spalt (23) vorhanden ist.

14. Gasleitung nach Anspruch 13,
**dadurch gekennzeichnet,**
**dass** bei ohne Überlapp geformter Gasleitung ein zusätzliches Materialstück (25) mit dem geformten Materialstück (13) verbunden, insbesondere durch Verkleben oder durch eine thermische Verbindung, insbesondere durch Verschweißen, ist, das Stoßstellen (27) und/oder Spalte (23) zwischen einander zugewandte Kanten (19, 21) des Materialstücks (13) von innen oder von außen gasdicht verschließt.

15. Gasleitung nach einem der vorhergehenden Ansprüche,
**dadurch gekennzeichnet,**
**dass** wenigstens eine zusätzliche, in Umfangsrichtung wirksame lokale Verstärkung (33, 35) vorgesehen ist.

16. Gasleitung nach Anspruch 15,
**dadurch gekennzeichnet,**
**dass** die Verstärkung (33, 35) von wenigstens einem zusätzlichen Materialstück (33) gebildet ist, das mit dem geformten Materialstück (13) verbunden, insbesondere durch Verkleben, durch Vernähen oder durch eine thermische Verbindung, insbesondere durch Verschweißen, ist und sich zumindest über einen Teilumfangsbereich der Gasleitung erstreckt, oder das in Form eines auf das geformte Materialstück (13) lediglich aufgeschobenen oder aufgesteckten Ring-, Manschetten-, Klammer- oder Clipsstücks vorgesehen ist.

17. Gasleitung nach Anspruch 15,
**dadurch gekennzeichnet,**
**dass** die Verstärkung von einstückig mit dem geformten Materialstück (13) ausgebildeten, durch entsprechendes Zuschneiden des geformten Materialstücks (13) entstandenen Materialabschnitten (35) gebildet ist.

18. Verwendung einer Gasleitung,
die derart ausgebildet ist, dass sie unter dem Einfluss eines durch sie hindurch strömenden Gases aus einer Montagekonfiguration in eine Aufblaskonfiguration mit gegenüber der Montagekonfiguration vergrößertem Strömungsquerschnitt gelangen kann, und die durch Formen eines im Ausgangszustand flächigen Materialstücks (13) hergestellt ist, das im Ausgangszustand eine Längsrichtung (15) aufweist, wobei im geformten Zustand die Längsrichtung (15) parallel zu einer Längsachse (17) der Gasleitung verläuft und ein als Ausgangsmaterial für das Materialstück (13) vorgesehenes Gewebe eine Gewebestruktur mit wenigstens einer identifizierbaren Vorzugsrichtung aufweist, die mit der Längsrichtung (15) des Materialstücks (13) im Ausgangszustand zusammenfällt,
zum Verbinden wenigstens eines aufblasbaren Luftsacks (41) einer Luftsackanordnung für Kraftfahrzeuge mit zumindest einem im am Fahrzeug montierten Zustand entfernt von dem Luftsack (41) angeordneten, zum Aufblasen des Luftsacks (41) dienenden Gasgenerator (11).

19. Verwendung nach Anspruch 18,
**dadurch gekennzeichnet,**
**dass** eine Gasleitung mit den Merkmalen eines der Ansprüche 2 bis 17 verwendet wird.

20. Luftsackanordnung für Kraftfahrzeuge mit wenigstens einem aufblasbaren Luftsack (41), zumindest einem im am Fahrzeug montierten Zustand entfernt von dem Luftsack (41) angeordneten Gasgenerator (11) zum Aufblasen des Luftsacks (41), und wenigstens einer Gasleitung nach einem der Ansprüche 1 bis 17, über die der Luftsack (41) aufblasbar ist und die im am Fahrzeug montierten Zustand zumindest teilweise außerhalb des Luftsacks (41) verläuft.

21. Verfahren zur Herstellung einer Gasleitung nach einem der Ansprüche 1 bis 17, für eine Luftsackanordnung für Kraftfahrzeuge,
bei dem ein im Ausgangszustand flächiges Materialstück (13) zu einem Schlauch geformt wird, wobei das Materialstück (13) im Ausgangszustand eine Längsrichtung (15) aufweist und im geformten Zustand die Längsrichtung (15) parallel zu einer Längsachse (17) des Schlauches verläuft und ein als Ausgangsmaterial für das Materialstück (13) vorgesehenes Gewebe eine Gewebestruktur mit wenigstens einer identifizierbaren Vorzugsrichtung aufweist, die mit der Längsrichtung (15) des Materialstücks (13) im Ausgangszustand zusammenfällt, und
bei dem der Schlauch umfangsseitig ausschließlich durch Kleben oder durch eine thermische Verbindung, insbesondere durch Verschweißen, gasdicht verschlossen wird.

## Claims

1. Gas pipe for an airbag arrangement for motor vehicles formed such that under the influence of gas emitted by a gas generator (11) and flowing through said pipe, it adapts from a mounting configuration to an inflating configuration with greater flow cross section in relation to the mounting configuration, wherein the gas pipe is produced by moulding a material piece (13) which is lamellar-shaped in its initial state and in its initial state has a longitudinal direction (15), where in the moulded state the longitudinal direction (15) runs parallel to a longitudinal axis (17) of the gas pipe, **characterised in that** a web provided as a starting material for the material piece (13) has a web structure with at least one identifiable preference direction that coincides with the longitudinal direction (15) of the material piece (13) in the initial state.

2. Gas pipe according to claim 1, **characterised in that** on its periphery the gas pipe is sealed gas-tight exclusively by gluing or by a thermal connection, in particular by welding.

3. Gas pipe according to claim 1 or 2, **characterised in that** the material piece (13) as a starting material comprises a web, in particular a web produced from synthetic fibres or plastic fibres, or a film.

4. Gas pipe according to any of the preceding claims, **characterised in that** the preference direction (15) runs parallel to the warp or weft threads forming the web.

5. Gas pipe according to claim 3 or 4, **characterised in that** the material piece (13) has an applied coating.

6. Gas pipe according to any of claims 3 to 5, **characterised in that** a coating is provided on both the inside and on the outside of the material piece (13).

7. Gas pipe according to claim 5 or 6, **characterised in that** for coating the same or a similar material is provided, in particular a silicone material, as for the adhesive provided for gas-tight sealing of the gas pipe.

8. Gas pipe according to any of the preceding claims, **characterised in that** the gas pipe is formed with overlap at least in sections.

9. Gas pipe according to claim 8, **characterised in that** the overlap extends over a peripheral area of less than 360°.

10. Gas pipe according to claim 8, **characterised in that** the overlap extends over a peripheral area of more than 360°.

11. Gas pipe according to any of claims 8 to 10, **characterised in that** on a gas pipe formed with overlap, the adhesion is formed over the full surface in the overlap area.

12. Gas pipe according to any of claims 8 to 10, **characterised in that** on a gas pipe formed with overlap, the adhesion is interrupted in the peripheral direction and is formed at least, in particular exclusively, in peripheral areas (29, 31) adjacent to edges (19, 21) of the material piece (13).

13. Gas pipe according to any of the preceding claims, **characterised in that** the gas pipe is formed without overlap at least in sections, wherein facing edges (19, 21) of the material piece (13) abut each other or a gap (23) is present between the edges (19, 21).

14. Gas pipe according to claim 13, **characterised in that** on a gas pipe formed without overlap, an additional material piece (25) is connected with the formed material piece (13), in particular by gluing or by thermal connection, in particular by welding, which seals gas-tight the abutment points (27) and/or gap (23) between facing edges (19, 21) of the material piece (13) from the inside or from the outside.

15. Gas pipe according to any of the preceding claims, **characterised in that** at least one additional reinforcement (33, 35) is provided which is locally active in the peripheral direction.

16. Gas pipe according to claim 15, **characterised in that** the reinforcement (33, 35) is formed by at least one additional material piece (33) which is connected with the formed material piece (13) in particular by gluing, sewing or by thermal connection, in particular by welding, and extends at least over a part peripheral area of the gas pipe, or which is provided in the form of a ring, sleeve, clamp or clip piece merely pushed or pressed onto the formed material piece (13).

17. Gas pipe according to claim 15, **characterised in that** the reinforcement is formed by material sections (35) formed in one piece with the moulded material piece (13) and produced by corresponding cutting of the moulded material piece (13).

18. Use of a gas pipe formed such that under the influence of a gas flowing through it, it can adapt from a mounting configuration into a inflating configuration with greater flow cross section in relation to the mounting configuration and is produced by moulding a material piece (13) which is lamellar-shaped in its initial state and in its initial state has a longitudinal direction (15), where in the moulded state the longitudinal direction (15) runs parallel to a longitudinal axis (17) of the gas pipe, and a web provided as a starting material for the material piece (13) comprises a web structure with at least one identifiable preference direction which coincides with the longitudinal direction (15) of the material piece (13) in its initial state, for connecting at least one inflatable airbag (41) of an airbag arrangement for motor vehicles with at least one gas generator (11) arranged remote from the airbag (41) in the state mounted on the vehicle and serving to inflate the airbag (41).

19. Use according to claim 18, **characterised in that** a gas pipe with the features of any of claims 2 to 17 is used.

20. Airbag arrangement for motor vehicles with at least one inflatable airbag (41), at least one gas generator (11) arranged remote from the airbag (41) in the state mounted in the vehicle and serving to inflate the airbag (41), and at least one gas pipe according to any of claims 1 to 17 via which the airbag (41) can be inflated and which runs at least partly outside the airbag (41) in the state mounted in the vehicle.

21. Method for production of a gas pipe according to any of claims 1 to 17 for an airbag arrangement for motor vehicles, in which a material piece (13) which is lamellar-shaped in its initial state is moulded into a hose, wherein the material piece (13) in its initial state has a longitudinal direction (15) and in the moulded state the longitudinal direction (15) runs parallel to a longitudinal axis (17) of the hose, and a web provided as starting material for the material piece (13) has a web structure with at least one identifiable preference direction which coincides with the longitudinal direction (15) of the material piece (13) in its initial state, and in which the hose on the periphery is sealed gas-tight exclusively by gluing and/or by thermal connection, in particular by welding.

## Revendications

1. Conduite de gaz pour un dispositif d'airbag pour véhicules automobiles configurée de manière à pouvoir passer, sous l'influence d'un gaz, libéré au moyen d'un générateur de gaz (11) et qui la traverse, d'une configuration de montage à une configuration de déploiement avec une section d'écoulement agrandie par rapport à la configuration de montage,
la conduite de gaz étant fabriquée par façonnage d'une pièce (13), plate à l'état d'origine, présentant un sens longitudinal (15) à l'état d'origine, le sens longitudinal (15), étant parallèle, à l'état façonné, à un axe longitudinal (17) de la conduite de gaz,
**caractérisée en ce qu'**
une matière tissée, prévue en tant que matériau de départ pour la pièce (13), présente une structure tissée comportant au moins un sens préférentiel identifiable qui correspond, à l'état d'origine, au sens longitudinal (15) de la pièce (13).

2. Conduite de gaz selon la revendication 1,
**caractérisée en ce que**
la conduite de gaz est fermée hermétiquement au gaz sur sa périphérie exclusivement par collage ou une liaison thermique, en particulier par soudage.

3. Conduite de gaz selon la revendication 1 ou la revendication 2,
**caractérisée en ce que**
la pièce (13) renferme, comme matériau de départ, une matière tissée, en particulier une matière tissée fabriquée à partir de fils plastiques ou de fibres plastiques, ou un film.

4. Conduite de gaz selon l'une quelconque des revendications précédentes,
**caractérisée en ce que**
le sens préférentiel (15) est parallèle aux fils de chaîne ou de trame formant la matière tissée.

5. Conduite de gaz selon la revendication 3 ou la revendication 4,
**caractérisée en ce qu'**
un revêtement est appliqué sur la pièce (13).

6. Conduite de gaz selon l'une quelconque des revendications 3 à 5,
**caractérisée en ce qu'**
un revêtement est prévu sur le côté intérieur et un autre sur le côté extérieur de la pièce (13).

7. Conduite de gaz selon la revendication 5 ou la revendication 6,
**caractérisée en ce que**,
pour le revêtement, c'est le même matériau ou un matériau de même type qui est prévu, en particulier un matériau silicone, que pour un produit adhésif prévu pour la fermeture hermétique au gaz de la conduite de gaz.

8. Conduite de gaz selon l'une quelconque des revendications précédentes,
**caractérisée en ce que**
la conduite de gaz est façonnée avec un chevauchement, du moins dans certaines zones.

9. Conduite de gaz selon la revendication 8,
**caractérisée en ce que**
le chevauchement s'étend sur une zone périphérique inférieure à 360°.

10. Conduite de gaz selon la revendication 8,
**caractérisée en ce que**
le chevauchement s'étend sur une zone périphérique supérieure à 360°.

11. Conduite de gaz selon l'une quelconque des revendications 8 à 10,
**caractérisée en ce que**,
lorsqu'elle est façonnée avec un chevauchement, le collage est réalisé sur toute la surface au niveau du chevauchement.

12. Conduite de gaz selon l'une quelconque des revendications 8 à 10,
**caractérisée en ce que**,
lorsqu'elle est façonnée avec un chevauchement, le collage est interrompu dans le sens périphérique et réalisé au moins, en particulier exclusivement, dans des zones marginales (29, 31) adjacentes à des arêtes (19, 21) de la pièce (13).

13. Conduite de gaz selon l'une quelconque des revendications précédentes,
**caractérisée en ce qu'**
elle est façonnée sans chevauchement, du moins sur certaines zones, les arêtes (19, 21) de la pièce (13) qui se font face, étant bout à bout ou une fente (23) existant entre les arêtes (19, 21).

14. Conduite de gaz selon la revendication 13,
**caractérisée en ce que**,
lorsqu'elle est façonnée sans chevauchement, une pièce supplémentaire (25) est reliée à la pièce façonnée (13), en particulier par collage ou par liaison thermique, en particulier par soudage, qui ferme hermétiquement au gaz, de l'intérieur ou de l'extérieur, les points d'aboutement (27) et/ou la fente (23) entre des arêtes (19, 21) se faisant face.

15. Conduite de gaz selon l'une quelconque des revendications précédentes,
**caractérisée en ce qu'**
au moins un renfort (33, 35) supplémentaire, localement efficace dans le sens périphérique, est prévu.

16. Conduite de gaz selon la revendication 15,
**caractérisée en ce que**
le renfort (33, 35) est formé par au moins une pièce (33) supplémentaire reliée à la pièce (13) façonnée, en particulier par collage, par couture ou par liaison thermique, en particulier par soudage, et s'étend au moins sur une zone périphérique partielle de la conduite de gaz ou est prévu sous forme de bague, de manchon, d'agrafe ou de clip seulement glissé(e) ou emboîté(e) sur la pièce (13) façonnée.

17. Conduite de gaz selon la revendication 15,
**caractérisée en ce que**
le renfort est formé par des tronçons de matériau (35) formant un seul morceau avec la pièce (13) façonnée, créés par découpe correspondante de la pièce (13) façonnée.

18. Utilisation d'une conduite de gaz,
configurée de manière à pouvoir passer, sous l'influence d'un gaz la traversant, d'une configuration de montage à une configuration de déploiement avec une section d'écoulement agrandie par rapport à la configuration de montage, et fabriquée par façonnage d'une pièce (13), plate à l'état d'origine, présentant un sens longitudinal (15) à l'état d'origine, le sens longitudinal (15), étant parallèle, à l'état façonné, à un axe longitudinal (17) de la conduite de gaz, et une matière tissée, prévue en tant que matériau de départ pour la pièce (13), présente une structure tissée comportant au moins un sens préférentiel identifiable qui correspond, à l'état d'origine, au sens longitudinal (15) de la pièce (13),
pour relier au moins un airbag gonflable (41) d'un dispositif d'airbags pour véhicules automobiles avec au moins un générateur de gaz (11) disposé à distance de l'airbag (41) à l'état monté sur le véhicule et servant à gonfler l'airbag (41).

19. Utilisation selon la revendication 18,
**caractérisée en ce qu'**
on utilise une conduite de gaz ayant les caractéristiques de l'une quelconque des revendications 2 à 17.

20. Dispositif d'airbags pour véhicules automobiles comportant au moins un airbag (41) gonflable, au moins un générateur de gaz (11) disposé à distance de l'airbag (41) à l'état monté sur le véhicule et servant à gonfler l'airbag (41) et au moins une conduite de gaz selon l'une quelconque des revendications 1 à 17 permettant de gonfler l'airbag (41) et qui passe, lorsqu'elle est montée sur le véhicule, au moins en partie à l'extérieur de l'airbag (41).

21. Procédé de fabrication d'une conduite de gaz selon l'une quelconque des revendications 1 à 17, pour un dispositif d'airbags pour véhicules automobiles,
dans lequel un tuyau est façonné dans une pièce (13), plate à l'état d'origine, la pièce (13) présentant un sens longitudinal (15) à l'état d'origine, le sens longitudinal (15) étant parallèle, à l'état façonné, à un axe longitudinal (17) du tuyau et une matière tissée, prévue en tant que matériau de départ pour la pièce (13), présente une structure tissée comportant au moins un sens préférentiel identifiable qui correspond, à l'état d'origine, au sens longitudinal (15) de la pièce (13) et
dans lequel le tuyau est fermé hermétiquement au gaz sur sa périphérie exclusivement par collage ou une liaison thermique, en particulier par soudage.
